Europäisches Patentamt

European Patent Office

Office européen des brevets

(11) Numéro de publication: **0 233 423**
**B1**

# FASCICULE DE BREVET EUROPEEN

(45) Date de publication du fascicule du brevet:
**09.08.89**

(51) Int. Cl.⁴: **B62M 3/08**

(21) Numéro de dépôt: **86402765.1**

(22) Date de dépôt: **11.12.86**

(54) **Pédale de bicyclette, ou d'engin analogue.**

(30) Priorité: **24.12.85 FR 8519135**

(43) Date de publication de la demande:
**26.08.87 Bulletin 87/35**

(45) Mention de la délivrance du brevet:
**09.08.89 Bulletin 89/32**

(84) Etats contractants désignés:
**AT BE CH DE ES FR GB IT LI LU NL SE**

(56) Documents cités:
**BE-A- 430 046**
**DE-A- 3 343 015**
**FR-A- 1 043 447**
**FR-A- 1 350 092**
**GB-A- 1 130 971**
**US-A- 2 399 888**

(73) Titulaire: **Beyl, Jean, 10, Boulevard Victor-Hugo, F-58000 Nevers(FR)**

(72) Inventeur: **Beyl, Jean, 10, Boulevard Victor-Hugo, F-58000 Nevers(FR)**

(74) Mandataire: **Peuscet, Jacques et al, Cabinet Peuscet 68, rue d'Hauteville, F-75010 Paris(FR)**

## Description

L'invention est relative à une pédale de bicyclette, ou d'engin analogue, du genre de celles qui comprennent un corps de pédale comportant un logement destiné à recevoir un axe transversal propre à être fixé sur une manivelle, à une extrémité faisant saillie hors du logement, le corps de pédale étant monté rotatif sur ledit axe transversal à l'aide de deux paliers rotatifs prévus respectivement au voisinage des extrémités dudit axe, entre la paroi interne du logement et l'axe, le palier rotatif prévu à l'extrémité de l'axe éloignée de la manivelle ayant un diamètre extérieur inférieur au diamètre extérieur du palier rotatif propre à être fixé au voisinage de la manivelle.

D'après la demande de modèle d'utilité JAPON publiée, n° 88948/78, on connaît une pédale de ce type. La semelle de la chaussure est destinée à reposer sur l'arête supérieure de deux barrettes transversales situées respectivement à l'avant et à l'arrière de l'axe de la pédale.

La surface d'appui de la semelle de la chaussure et donc la surface d'appui du pied de l'utilisateur se trouve à une distance relativement forte, au-dessus de l'axe de la pédale. Cette distance est de l'ordre de 17 mm dans une pédale classique. Une telle distance est gênante car elle peut être à l'origine d'un couple de basculement parasite autour de l'axe de la pédale, ce couple étant d'autant plus important que la distance est grande. En effet, la force résultante des efforts de pédalage peut ne pas couper en permanence l'axe géométrique de la pédale pendant un tour de pédalage ; lorsqu'un tel couple de basculement apparaît, l'utilisateur doit consacrer, même s'il ne s'en rend pas compte, une partie de son effort et donc de sa puissance de pédalage, à la compensation de ce couple de basculement. Il en résulte une perte de puissance et d'efficacité.

En outre, lors du passage de la manivelle vers le point mort haut, la longueur de la manivelle est augmentée de la distance en question ; par contre, au point mort bas, la longueur de la manivelle est diminuée de cette distance. La force exigée de l'utilisateur, au cours d'un tour de pédalage, va donc varier pour un couple constant ; ou bien, si l'utilisateur maintient son effort constant sur un tour de pédalage, le couple varie selon la position de la manivelle.

Un tel inconvénient prend de l'importance pour des parcours de longue durée, par exemple de plusieurs heures, notamment en compétition. Des techniques de pédalage sont développées pour compenser ce défaut créé par la distance entre l'axe géométrique de la pédale et la surface d'appui, ces techniques de pédalage faisant appel à des mouvements de la cheville et des articulations. Il en résulte une fatigue supplémentaire.

Il est souhaitable, par ailleurs, que toute modification apportée à une pédale de bicyclette en vue de réduire la distance évoquée précédemment, n'entraîne pas d'inconvénient dans un autre domaine et, en particulier, ne réduise pas la durée de vie de la pédale et son aptitude à tourner le mieux possible autour de son axe, ni ne modifie sensiblement la mise en place du pied sur la pédale et les possibilités de dégagement du pied, par rapport à la pédale.

L'invention a pour but, surtout, de fournir une pédale dans laquelle la surface d'appui, pour le pied de l'utilisateur, se trouve à une distance réduite de l'axe géométrique de rotation de cette pédale, sans que pour autant les qualités de rotation et de durée de vie de la pédale ainsi que les possibilités de mise en place et de dégagement du pied de l'utilisateur soient altérées. Il est souhaitable, également, de réduire le poids de la pédale, sans en diminuer ses capacités de résistance mécanique.

Selon l'invention, une pédale de bicyclette ou d'engin analogue, du genre défini précédemment, est caractérisée par le fait que le corps de pédale présente une surface d'appui, pour la semelle de la chaussure de l'utilisateur, constituée par une portion de surface plane sensiblement parallèle à l'axe géométrique dudit axe de pédale, et s'étendant jusqu'au bord latéral extérieur du corps de pédale, sans aucune aspérité ou saillie, cette surface d'appui recouvrant le palier rotatif et étant située à une distance de l'axe géométrique inférieure à la dimension radiale extérieure du corps au niveau du palier rotatif propre à être situé au voisinage de la manivelle, cette surface d'appui étant située vers l'extérieur par rapport à ce palier rotatif.

De préférence, la surface d'appui du corps de pédale a une forme sensiblement rectangulaire, dont la grande dimension est orientée parallèlement à l'axe géométrique, tandis que la petite dimension de cette surface est supérieure au diamètre de l'axe de la pédale.

Avantageusement, la surface plane, formant surface d'appui pour la semelle, est solidaire de la paroi du logement recevant l'axe transversal.

Le palier rotatif destiné à se trouver au voisinage de la manivelle comprend un roulement à billes et le maintien du corps de pédale par rapport à l'axe, suivant une direction parallèle à l'axe géométrique dudit axe, est assuré uniquement par le roulement, tandis que le palier rotatif prévu à l'extrémité de l'axe éloignée de la manivelle est constitué par une douille à aiguilles.

La bague intérieure du roulement à billes est arrêtée par rapport à l'axe à l'aide d'un segment d'arrêt élastique ancré dans cet axe et situé vers l'extérieur, ladite bague intérieure étant arrêtée, de l'autre côté, par un épaulement de l'axe, tandis que la bague extérieure du roulement est arrêtée, vers l'intérieur, par rapport à la paroi du logement du corps de pédale, à l'aide d'un segment d'arrêt élastique ancré dans ladite paroi du logement, et, de l'autre côté, par un épaulement circulaire prévu dans cette paroi du logement.

Le susdit palier rotatif, éloigné de la manivelle, notamment la douille à aiguilles, est situé à l'intérieur du logement du corps de pédale, notamment au voisinage du plan médian longitudinal de la surface d'appui, de manière à encaisser la majeure partie de l'effort de pédalage. De préférence, le palier rotatif, notamment la douille à aiguilles, est disposé vers l'extérieur par rapport à ce plan médian longitudinal de la surface d'appui, le plan moyen de la douille, orthogonal à l'axe, étant situé notamment à une distance inférieure à 10 mm de ce plan médian longitudinal.

La longueur de la partie de l'axe de la pédale située à l'intérieur du logement du corps de pédale est inférieure à la longueur totale de ce logement, de telle sorte qu'il existe un espace libre entre l'extrémité de l'axe située à l'intérieur du logement et l'extrémité extérieure de ce logement.

Le corps de pédale présente une zone de raccordement, notamment sensiblement tronconique, entre la partie qui entoure le palier rotatif destiné à se trouver au voisinage de la manivelle, et la partie située vers l'extérieur par rapport à ce palier, les dimensions radiales de cette zone de raccordement diminuant progressivement en direction de l'extérieur, la susdite partie du corps de pédale située vers l'extérieur par rapport audit palier rotatif étant destinée à servir de surface d'appui pour le pied de l'utilisateur et se trouvant à une distance réduite de l'axe géométrique dudit axe de la pédale.

L'extrémité du logement située vers l'extérieur peut être fermée par un bouchon démontable. En variante, le logement peut être borgne auquel cas il est fermé, du côté de l'extérieur, par une paroi faisant partie intégrante du corps de pédale, ce qui assure une parfaite étanchéité pour la douille à aiguilles.

La distance entre la surface d'appui de la semelle de l'utilisateur et l'axe géométrique de l'axe de pédale est de préférence inférieure à 10 mm et notamment de l'ordre de 9 mm.

Avantageusement, le diamètre de l'axe, au niveau de la douille à aiguilles est de 8 mm, et le diamètre extérieur de cette douille à aiguilles est de 12 mm.

La distance transversale entre le bord intérieur du corps de pédale et la manivelle est suffisamment faible pour que, en dépit de la surface de raccordement entre la zone entourant le palier rotatif voisin de la manivelle et la surface d'appui proprement dite, la distance transversale moyenne entre le plan longitudinal médian de la surface d'appui et la manivelle reste la même que dans une pédale classique. La distance transversale entre le bord intérieur du corps de pédale et la manivelle est suffisamment grande, cependant, pour permettre un montage et un démontage aisés de la pédale sur la manivelle à l'aide d'une clé plate ou équivalent, d'épaisseur appropriée.

La pédale peut comprendre, d'une manière semblable à une pédale classique, deux barrettes transversales prévues respectivement à l'avant et à l'arrière, les arêtes supérieures de ces barrettes appartenant à la surface d'appui et étant situées dans un plan tangent à la paroi extérieure du logement, la distance de ce plan à l'axe géométrique de la pédale étant inférieure à la dimension extérieure du logement au niveau du palier rotatif voisin de la manivelle.

L'invention consiste, mises à part les dispositions exposées ci-dessus, en un certain nombre d'autres dispositions dont il sera plus explicitement question ci-après à propos d'un mode de réalisation particulier décrit avec référence au dessin ci-annexé, mais qui n'est nullement limitatif.

La figure 1, de ce dessin, est une coupe transversale d'une pédale conforme à l'invention, au niveau de l'axe de cette pédale, avec représentation schématique d'une chaussure appuyant sur la pédale.

La figure 2 est une vue en plan par rapport à la figure 1.

La figure 3, enfin, est une coupe suivant la ligne III-III, figure 2.

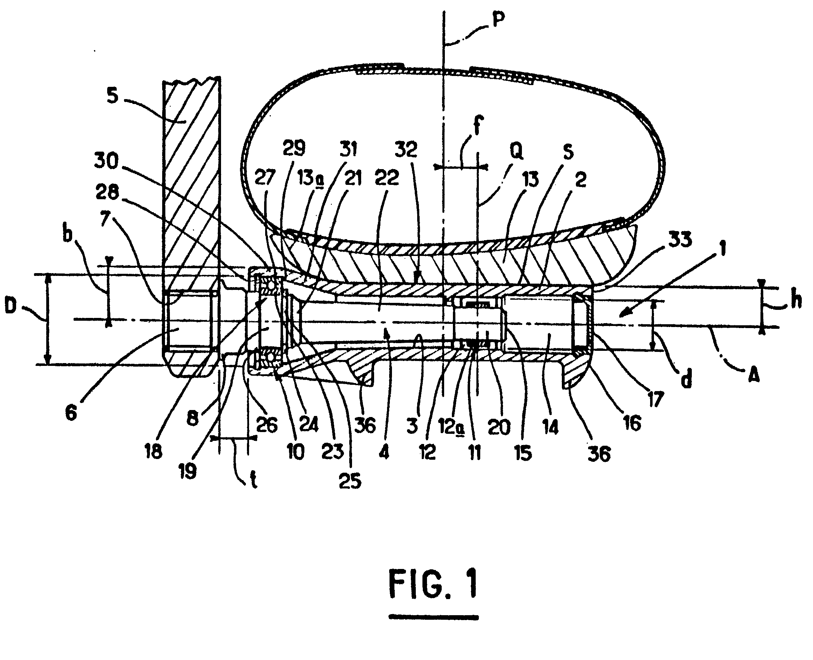

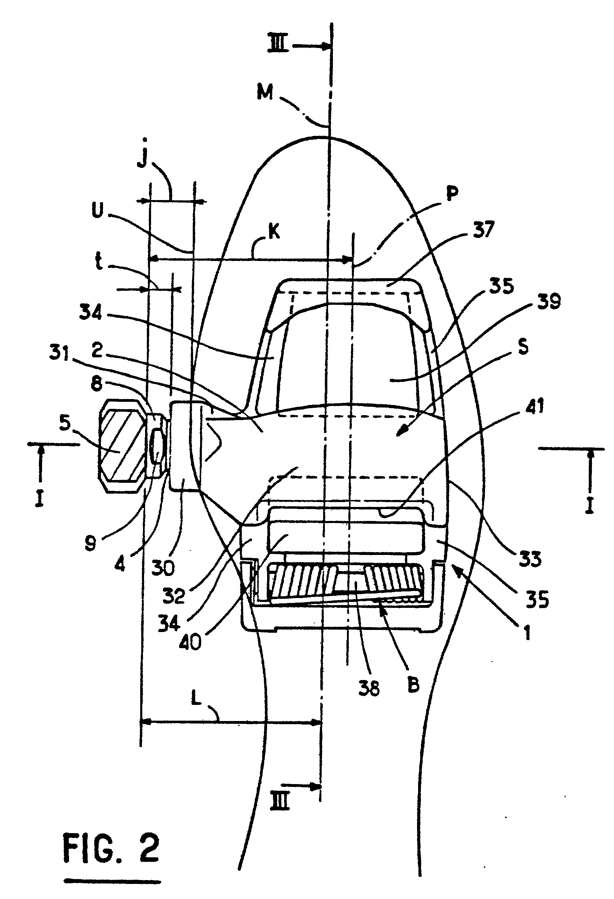

En se reportant au dessin, notamment à la figure 1, on peut voir une pédale 1 de bicyclette, ou d'engin analogue, comprenant un corps de pédale 2 qui comporte un logement 3 destiné à recevoir un axe transversal 4. Cet axe est propre à être fixé sur une manivelle 5, partiellement représentée, à une extrémité 6 faisant saillie hors du logement 3. Généralement, cette extrémité 6 comporte un filetage extérieur permettant le vissage et le blocage dans un trou taraudé 7 de la manivelle. Un épaulement 8 est prévu pour le blocage contre la manivelle 5. Des méplats tels que 9 (fig. 2) sont prévus du côté extérieur de l'épaulement 8 pour permettre d'effectuer le serrage avec une clé plate introduite entre la manivelle 5 et le corps de pédale 2.

Deux paliers rotatifs 10, 11 prévus respectivement au voisinage des extrémités de l'axe 4 assurent un montage rotatif du corps de pédale 2 sur l'axe 4. Ces paliers 10 et 11 sont disposés entre l'axe 4 et la surface intérieure du logement 3.

Le palier rotatif 11 prévu à l'extrémité de l'axe 4 éloignée de la manivelle 5 comprend une douille à aiguilles 12 dont le diamètre extérieur $\underline{d}$ est inférieur au diamètre extérieur D du palier rotatif 10 situé au voisinage de la manivelle 5. Le corps de pédale 2 présente une surface d'appui S pour le pied de l'utilisateur et la semelle 13 de sa chaussure, qui est située à une distance $\underline{h}$ de l'axe géométrique A, dudit axe de pédale 4, inférieure à la dimension radiale extérieure $\underline{b}$ du corps de pédale 2 au niveau du palier rotatif 10.

La douille à aiguilles 12 est située à l'intérieur du logement 3 du corps de pédale, au voisinage du plan médian longitudinal P de la surface d'appui S. Ce plan P est orthogonal à l'axe A ; l'effort de pédalage est situé au voisinage de ce plan P qui correspond également sensiblement au plan moyen M (figure 2) du pied de l'utilisateur, de telle sorte que la douille à aiguilles 12 encaisse la majeure partie de l'effort de pédalage.

Cette douille à aiguilles 12 est disposée, de préférence, vers l'extérieur par rapport au plan médian P de la surface d'appui, le plan moyen Q de la douille à aiguilles 12, orthogonal à l'axe A, étant situé à une distance $\underline{f}$ du plan P inférieure à 10 mm.

La longueur de la partie de l'axe 4 située à l'intérieur du logement 3 est inférieure à la longueur de ce logement 3 de telle sorte qu'il existe un espace libre 14 entre l'extrémité 15 de l'axe 4 située à l'intérieur du logement 3, et l'extrémité extérieure 16 du logement 3.

Il est à noter que la longueur de l'axe 4 étant réduite par rapport à un axe de pédale classique qui traverse complètement transversalement la pédale, un gain de poids est obtenu selon l'invention.

L'extrémité du logement 3 située vers l'extérieur peut être fermée par un bouchon 17 démontable.

Selon une variante non représentée, le logement 3 peut être borgne du côté de l'extérieur, et fermé par une paroi faisant partie intégrante du corps de pédale 2.

Le palier rotatif 10, voisin de la manivelle 5, comprend un roulement à billes 18 monté sur une partie 19 de l'arbre 4 dont le diamètre est supérieur à celui de la partie d'extrémité 20 dudit axe 4, sur laquelle est montée la douille à aiguilles 12. Les deux parties 19 et 20 de l'arbre 4 sont cylindriques et usinées avec précision. La transition entre ces deux parties est assurée par une zone tronconique 21, dont les génératrices sont fortement inclinées sur l'axe A, cette zone 21 ayant une dimension axiale réduite et étant suivie par une partie 22 également tronconique, de plus grande longueur suivant l'axe A. Les génératrices de la partie 22 sont faiblement inclinées par rapport à l'axe A, la section transversale de la partie 22 diminuant progressivement en direction de la partie d'extrémité 20.

L'enveloppe extérieure de la douille à aiguilles 12 est montée serrée dans un alésage du logement 3, tandis que les aiguilles 12a de cette douille sont montées libres en translation axiale par rapport à la partie 20 de l'arbre 4.

La bague intérieure 23 du roulement 18 est arrêtée, par rapport à l'axe 4, à l'aide d'un segment d'arrêt élastique 24 ancré dans cet axe, plus précisément dans une gorge périphérique 25 prévue sur la partie 19 de cet axe, vers l'extérieur, c'est-à-dire du côté opposé à la manivelle 5. De l'autre côté, la bague intérieure 23 est arrêtée par un épaulement 26 de l'axe 4. La bague extérieure 27 du roulement est arrêtée, vers l'intérieur, c'est-à-dire du côté de la manivelle 5, par un segment d'arrêt élastique 28 ancré dans une gorge prévue dans la paroi du logement 3 ; de l'autre côté, la bague extérieure 28 est arrêtée par un épaulement circulaire 29 prévu dans ladite paroi du logement.

La partie 30 du corps de pédale qui entoure la bague extérieure 27 du roulement a sensiblement la forme d'un manchon cylindrique. Le corps de pédale 2 présente une zone de raccordement 31 entre cette partie 30 et la partie 32 du corps située vers l'extérieur par rapport au palier 10 ; la surface supérieure de cette partie 32 constitue la surface d'appui S. La zone de raccordement 31 est de préférence sensiblement tronconique son diamètre diminuant progressivement depuis la partie 30 jusqu'à la partie 32.

Comme visible d'après la figure 1, la semelle 13 de la chaussure appuie essentiellement sur la surface S essentiellement plane et parallèle à l'axe A; seul le bord intérieur 13a de la semelle 13 qui se relève est partiellement en contact avec la petite base de la zone de raccord 31.

La distance transversale t entre le bord intérieur du corps de pédale 2, c'est-à-dire la face intérieure du manchon 30, et la manivelle 5 est suffisamment faible pour que, en dépit de la surface de raccordement 31 sur laquelle la semelle 13 de la chaussure de l'utilisateur ne prend pratiquement appui, la distance transversale moyenne L (figure 2) entre le plan longitudinal médian M de la chaussure sensiblement orthogonal à l'axe A, et la manivelle 5, reste la même que dans une pédale classique. Cette distance L pour le mode de réalisation de l'invention décrit est d'environ 51 mm pour une chaussure correspondant à une pointure 41. Dans la pratique, le bord intérieur de la chaussure, quelle que soit la pointure de cette chaussure, est tangent à une plan U, orthogonal à l'axe A, et situé à une distance constant j (figure 2) de la manivelle 5. Dans un exemple de réalisation selon l'invention, cette distance j est de l'ordre de 13 mm. Dans ces conditions, on conçoit que la distance L varie légèrement en fonction de la largeur du pied de l'utilisateur (et donc de la pointure du pied). Cela est vrai pour tous types de pédales à partir du moment où l'on souhaite que le bord intérieur de la chaussure occupe toujours la même position, par rapport à la manivelle 5, quelle que soit la largeur du pied.

La distance moyenne K entre le plan longitudinal médian P de la surface d'appui S et la manivelle 5 est sensiblement la même que dans une pédale classique.

La surface d'appui S est avantageusement constituée par une portion de surface plane sensiblement parallèle à l'axe A et qui s'étend jusqu'au bord extérieur 33 du corps de pédale 2, sans aucune aspérité ou saillie. Il est ainsi possible à l'utilisateur de faire coulisser transversalement son pied sur la surface S vers l'extérieur, par exemple pour dégager ce pied de la pédale, sans rencontrer d'obstacle sur la surface S. Comme visible sur la figure 2, cette surface S peut avoir une forme sensiblement rectangulaire, dont la grande dimension est orientée parallèlement à l'axe A, tandis que la petite dimension de cette surface S est nettement supérieure au diamètre de l'axe 4, notamment supérieure au double de ce diamètre.

Le corps de pédale 2 peut se prolonger vers l'avant et vers l'arrière de la partie comportant la surface S par des branches telles que 34, 35, visibles sur la figure 2, reliées à leurs extrémités avant et arrière respectivement, ces branches permettant de compléter le corps de pédale, notamment en vue du montage d'un dispositif de fixation de la chaussure sur la pédale, en particulier d'un dispositif B tel que décrit et revendiqué dans les demandes de brevet FR 84 07786 déposée le 18 mai 1984 et publiée sous le numéro 2 564 414 et FR 84 19173 déposée le 14 décembre 1984 et publiée sous le numéro 2 574 743.

Des nervures de rigidification telles que 36 peuvent être prévues sur le corps de pédale du côté opposé à la surface d'appui S.

Le corps de pédale 2 peut être réalisé monobloc, notamment en alliage léger moulé.

La liaison entre les extrémités avant des branches 34, 35 est assurée par une barrette transversale 37. Les extrémités arrière des branches 34, 35 comportent des trous servant de palier à un axe 38 pour un dispositif d'accrochage automatique B de la chaussure.

Une ouverture 39 sensiblement rectangulaire allongée est délimitée par la barrette avant 37 et le bord avant de la surface d'appui S.

Une ouverture-fenêtre 40, sensiblement rectangulaire, s'étend vers l'arrière à partir du bord arrière 41 de la surface d'appui S.

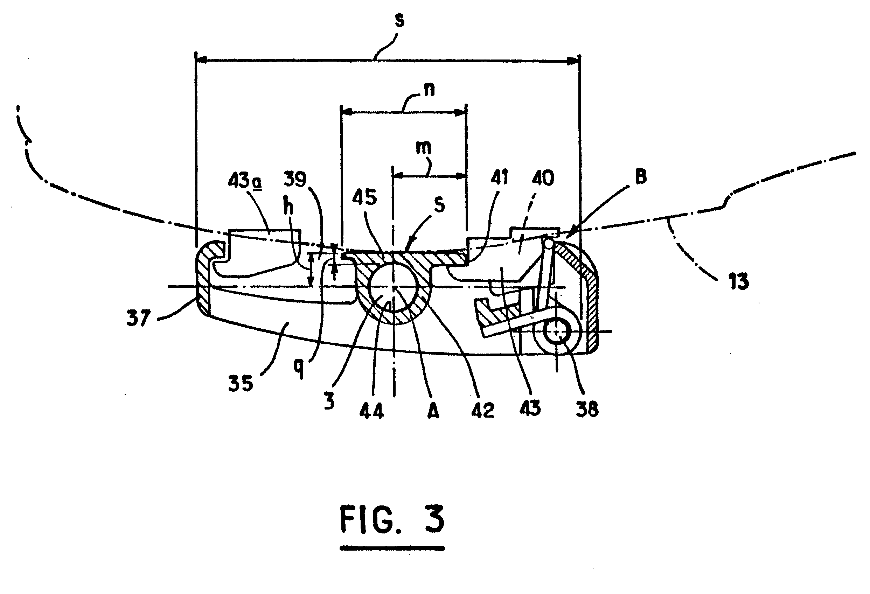

Ce bord arrière 41. comme visible sur la figure 2, est rectiligne, parallèle à l'axe de la pédale. Comme visible sur la figure 3, le bord 41 fait saillie vers l'arrière par rapport au manchon 42 de la pédale dans lequel est engagé l'axe 4 (non représenté sur la figure 3). Ce bord 41 peut servir de rebord d'accrochage à une cale 43 fixée sous la semelle 13 de la chaussure. La distance $\underline{m}$ (figure 3) entre le bord arrière 41 et l'axe géométrique A de la pédale est de préférence inférieure à 20 mm (vingt millimètres).

Comme visible d'après la figure 3, la dimension $\underline{n}$ de la surface d'appui, suivant la direction longitudinale est nettement inférieure à la longueur totale $\underline{s}$ de la pédale, notamment inférieure à la moitié de $\underline{s}$ et sensiblement de l'ordre du tiers. L'alésage 44, dans lequel est logée la douille à aiguilles, est réalisé directement dans le manchon 41. La paroi supérieure 45 du corps de pédale est tangente, par sa face interne, à l'alésage 44. L'épaisseur $\underline{g}$ de la paroi 45 est choisie aussi faible que possible, notamment de l'ordre de 3 mm. Le diamètre de l'alésage 44 pouvant être de 12 mm, il en résulte que la distance $\underline{h}$ de la surface S à l'axe A peut descendre à : (12/2)+3 = 9 mm.

Il est à noter que la cale 43 vient se loger dans la fenêtre 40, de même qu'une cale 43$\underline{a}$, située plus en avant sous la semelle 13 de la chaussure, vient se loger dans la fenêtre 39. Ainsi, la semelle 13 peut appuyer directement sur la surface S.

L'assemblage des pièces d'une pédale conforme à l'invention résulte immédiatement des explications précédentes.

Le roulement 18 est monté sur la partie cylindrique 19 de l'arbre 4, et la bague intérieure 23 de ce roulement est arrêtée par la mise en place du segment 24 dans la gorge 25.

L'arbre 4 est ensuite introduit dans le logement 3 du corps de pédale 2 jusqu'à ce que la bague extérieure 27 du roulement 18 vienne en appui contre l'épaulement 29. Le segment 28 est alors mis en place dans la gorge prévue à cet effet, de manière à arrêter complètement la bague 27.

Par l'autre extrémité du logement 3, dépourvue de son bouchon 17, on introduit la douille à aiguilles 12 dans l'espace 14. On engage les aiguilles 12$\underline{a}$ autour de la portée 20 de l'extrémité de l'arbre 4 tandis que la bague extérieure de la douille 12 est engagée avec serrage dans la partie 44 du logement 3 prévue à cet effet. Le bouchon 17 est ensuite mis en place.

Le maintien du corps 2 par rapport à l'axe 4, suivant une direction parallèle à l'axe A est assuré uniquement par le roulement 23.

Les efforts de pédalage orientés sensiblement orthogonalement à l'axe A sont essentiellement encaissés par la douille à aiguilles 12, spécialement adaptée pour un tel travail radial.

Une pédale conforme à l'invention permet de rapprocher sensiblement la surface d'appui S de l'axe A, tout en conservant un montage en rotation de grande qualité, grâce à l'arbre 4, rectiligne, ancré dans la manivelle et s'étendant dans le corps 2 de la pédale, au-delà du plan médian longitudinal P. Les conditions de mise en place du pied sur la pédale ou de retrait de ce pied ne sont pas altérées, et sont même améliorées.

La diminution de la distance entre la semelle de la chaussure et l'axe de la pédale permet d'abaisser, en conséquence, la selle de la bicyclette et de réduire les dimensions du cadre. Il en résulte un gain de poids venant s'ajouter à celui procuré par la pédale conforme à l'invention.

La diminution de la distance entre la surface d'appui et l'axe géométrique A apportée par la douille à aiguilles est relativement importante. Par exemple, dans le cas d'un axe dont le diamètre est de 8 mm, le diamètre extérieur d'un roulement à billes, pour un tel axe, est de l'ordre de 22 mm tandis que le diamètre extérieur d'une douille à aiguilles pour ce même axe est de l'ordre de 12 mm.

Il est à noter que de nombreuses variantes de réalisation sont possibles dans le cadre de l'invention.

Par exemple, la pédale peut comporter à l'avant et à l'arrière une barrette transversale dont l'arête, appartenant à la surface d'appui, est située dans un plan passant par cette surface d'appui.

Dans le cas où le logement 3 serait borgne, l'usinage des portées de ce logement 3 et le montage de la douille 12 seraient effectués à partir de la seule extrémité ouverte, située du côté de la manivelle 5.

**Revendications**

1. Pédale de bicyclette, ou d'engin analogue, comprenant un corps de pédale qui comporte un logement destiné à recevoir un axe transversal propre à être fixé sur une manivelle à une extrémité faisant saillie hors du logement, le corps de pédale étant monté rotatif sur ledit axe transversal à l'aide de deux paliers rotatifs prévus respectivement au voisinage des extrémités dudit axe, le palier rotatif prévu à l'extrémité de l'axe éloignée de la manivelle ayant un diamètre extérieur inférieur au diamètre extérieur du palier rotatif propre à être situé au voisinage de la manivelle, caractérisée par le fait que le corps de pédale (2) présente une surface d'appui (S), pour la semelle (13) de la chaussure de l'utilisateur, constituée par une portion de surface plane sensiblement parallèle à l'axe géométrique (A) dudit axe de pédale (4), et s'étendant jusqu'au bord latéral extérieur (33) du corps de pédale (2), sans aucune aspérité ou saillie, cette surface d'appui (S) recouvrant le palier rotatif (11) et étant située à une distance (h) de l'axe géométrique (A) inférieure à la dimension radiale extérieure ($\underline{b}$) du corps (2) au niveau du palier rotatif (10) propre à être situé au voisinage de la manivelle (5), cette surface d'appui (S) étant située vers l'extérieur par rapport à ce palier rotatif (10).

2. Pédale selon la revendication 1 caractérisée par le fait que la surface d'appui (S) du corps de pédale (2) a une forme sensiblement rectangulaire, dont la grande dimension est orientée parallèlement à l'axe géométrique (A), tandis que la petite dimension de cette surface (S) est supérieure au diamètre de l'axe (4) de la pédale.

3. Pédale selon la revendication 2, caractérisée par le fait que la petite dimension de la surface d'appui (S) est supérieure au double du diamètre de l'axe (4) de la pédale.

4. Pédale de bicyclette, ou d'engin analogue, selon l'une quelconque des revendications précédentes, caractérisée par le fait que le palier rotatif (10) destiné à se trouver au voisinage de la manivelle (5) comprend un roulement à billes (18) et que le maintien du corps de pédale (2) par rapport à l'axe (4), suivant une direction parallèle à l'axe géométrique (A) dudit axe (4), est assuré uniquement par le roulement (18), tandis que le palier rotatif (11) prévu à l'extrémité de l'axe (4) éloignée de la manivelle (5) est constitué par une douille à aiguilles (12), la bague intérieure (23) du roulement à billes (18) étant arrêtée par rapport à l'axe (4) à l'aide d'un segment d'arrêt élastique (24) ancré dans cet axe et situé vers l'extérieur, ladite bague intérieure (23) étant arrêtée, de l'autre côté, par un épaulement (26) de l'axe, tandis que la bague extérieure (27) du roulement est arrêtée, vers l'intérieur, par rapport à la paroi du logement (3), et, de l'autre côté, par un épaulement circulaire (29) prévu dans cette paroi du logement.

5. Pédale selon l'une quelconque des revendications précédentes, dans laquelle le palier rotatif prévu à l'extrémité de l'axe éloignée de la manivelle est constitué par une douille à aiguilles (12), caractérisée par le fait que le plan moyen (Q) de la douille à aiguilles est situé vers l'extérieur par rapport au plan médian longitudinal (P) de la surface d'appui (S) de la pédale, à une distance (f) inférieure à 10 mm de ce plan médian longitudinal (P).

6. Pédale selon l'une quelconque des revendications précédentes, caractérisée par le fait que le corps de pédale (2) présente une zone de raccordement (31), notamment sensiblement tronconique, entre la partie (30) qui entoure le palier rotatif (10) destiné à se trouver au voisinage de la manivelle, et la partie (32) située vers l'extérieur par rapport à ce palier, destinée à servir de surface d'appui (S).

7. Pédale selon l'une quelconque des revendications précédentes, caractérisée par le fait que la distance (h) entre la surface d'appui (S) pour la semelle (13) de la chaussure du pied de l'utilisateur, et l'axe géométrique (A) de l'axe transversal (4) est inférieure à 10 mm, et notamment sensiblement égale à 9 mm.

8. Pédale selon l'une quelconque des revendications précédentes, caractérisée par le fait que la distance transversale (t) entre le bord intérieur du corps de pédale (2) et la manivelle (5) est suffisamment faible pour que, en dépit de la surface de raccordement (31) entre la zone (30) entourant le palier rotatif (10) voisin de la manivelle (5) et la surface d'appui (S) proprement dite, la distance transversale moyenne (K) entre le plan longitudinal médian (P) de la surface d'appui et la manivelle (5) soit sensiblement la même que dans une pédale classique.

9. Pédale selon la revendication 4 ou selon l'ensemble de la revendication 4 et l'une quelconque des revendications 5 à 8, caractérisée par le fait que le diamètre extérieur de la douille à aiguilles est de 12 mm, pour un diamètre de l'axe de 8 mm.

10. Pédale selon l'une quelconque des revendications précédentes, caractérisée par le fait qu'une fenêtre (39) est délimitée par le bord avant de la surface d'appui (S) et qu'une autre fenêtre (40) est délimitée par le bord arrière (41) de la surface d'appui (S), ce bord arrière (41) étant rectiligne et parallèle à l'axe (A) de la pédale.

11. Pédale selon la revendication 10, caractérisée par le fait que la distance (m) du bord arrière (41) de la pédale à l'axe géométrique (A) de cette pédale est inférieure à 20 mm.

12. Pédale selon l'une quelconque des revendications précédentes, caractérisée par le fait que le corps de pédale comporte un manchon (42) dans lequel est engagé l'axe (4) de la pédale, et la surface d'appui (S) comporte un bord arrière (41) qui fait saillie vers l'arrière par rapport au manchon (42) de la pédale, ce bord arrière (41) pouvant servir de rebord d'accrochage à une cale (43) fixée sous la semelle (13) de la chaussure.

13. Pédale selon la revendication 5, caractérisée par le fait que la douille à aiguilles (12) est logée dans un alésage (44) réalisé directement dans le manchon (42), tandis que le corps de pédale présente une paroi supérieure (45) qui est tangente, par sa face interne, à l'alésage (44).

**Claims**

1. A bicycle pedal or similar device comprising a pedal body which contains a housing intended to accommodate a transverse pin capable of being fixed to a crank at one end projecting out of the housing, the pedal body being rotatably mounted on the said transverse pin by means of two rotary bearings provided respectively near the ends of the said pin, the rotary bearing provided at the end of the pin remote from the crank having an external diameter which is smaller than the external diameter of the rotary bearing capable of being situated near the crank, characterised in that the pedal body (2) has a bearing surface (S) for the sole (13) of the user's foot, constituted by a portion of a substantially flat surface parallel to the geometrical axis (A) of the said pedal pin (4), and extending as far as the external side edge (33) of the pedal body (2) without any unevenness or projection, this bearing surface (S) covering the rotary bearing (11) and being situated at a distance (h) from the geometrical axis (A) which is smaller than the external radial dimension (b) of the barrel (2) at the level of the rotary bearing (10), capable of being situated near the crank (5), this bearing surface (S) being situated towards the outside in relation to this rotary bearing (10).

2. A pedal according to claim 1, characterised in that the bearing surface (S) of the pedal body (2) has a substantially rectangular shape whose large dimension is orientated parallel to the geometrical axis (A), whilst the small dimension of this surface (A) is larger than the diameter of pin (4) of the pedal.

3. A pedal according to claim 2, characterised in that the small dimension of the bearing surface (S) is larger than twice the diameter of the pin (4) of the pedal.

4. A bicycle pedal or a similar device according to any one of the preceding claims, characterised in that the rotary bearing (10) intended to be located near the crank (5) comprises a ball bearing (18) and that the hold of the pedal body (2) in relation to the pin (4), along a direction parallel to the geometrical axis (A) of the said pin (4) is solely ensured by the ball bearing (18) whilst the rotary bearing (11) provided at the end of pin (4) remote from the crank (5) is constituted by a needle bearing (12), the internal race (23) of the ball bearing (18) being secured in relation to the pin (4) by means of an elastic stopping segment (24) anchored in this pin, and situated outside, the said internal race (23) being secured on the other side by a shoulder (26) of the pin, whilst the external race (27) of the ball bearing is secured towards the inside, in relation to the wall of the housing (3) of the pedal body, by means of an elastic stopping segment (28) anchored in the said wall of the housing (3) and, on the other side, by a circular shoulder (29) provided in this wall of the housing.

5. A pedal according to any one of the preceding claims, wherein the rotary bearing provided at the end of the pin remote from the crank is constituted by a needle bearing (12), characterised in that the median plane (Q) of the needle bearing is situated towards the outside in relation to the longitudinal median plane (P) of the bearing surface (S) of the pedal at a distance ($f$) from this longitudinal median plane (P) which is smaller than 10 mm.

6. A pedal according to any one of the preceding claims, characterised in that the pedal body (2) has a transition zone (31) which is in particular, substantially frusto-conical between the portion (30) surrounding the rotary bearing (10) intended to be located near the crank and the portion (32) situated towards the outside in relation to this bearing intended to serve as the bearing surface (S).

7. A pedal according to any one of the preceding claims, characterised in that the distance (h) between the bearing surface (S) for the sole (13) of the user's foot, and the geometrical axis (A) of the transverse pin (4) is smaller than 10 mm and, in particular, substantially equal to 9 mm.

8. A pedal according to any one of the preceding claims, characterised in that the transverse distance ($t$) between the internal edge of the pedal body (2) and the crank (5) is sufficiently small for the mean transverse distance (K) between the longitudinal median plane (P) of the bearing surface and the crank (5) to be substantially the same as in a conventional pedal, in spite of the transition zone (31) between the zone (30) surrounding the rotary bearing (10) near the crank (5) and the bearing surface (S) properly so called.

9. A pedal according to claim 4 or according to a combination of claim 4 and any one of claims 5 to 8, characterised in that the external diameter of the needle bearing is 12 mm, for a pin diameter of 8 mm.

10. A pedal according to any one of the preceding claims, characterised in that a window (39) is delimited by the front edge of the bearing surface (S) and that another window (40) is delimited by the rear edge (41) of the bearing surface (S), this rear edge (41) being rectilinear and parallel to the axis (A) of the pedal.

11. A pedal according to claim 10, characterised in that the distance ($m$) of the rear edge (41) of the pedal to the geometrical axis (A) of this pedal is less than 20 mm.

12. A pedal according to any one of the preceding claims, characterised in that the pedal body comprises a sleeve (42) in which the pedal pin (4) is engaged, and the bearing surface (S) comprises a rear edge (41) which projects rearwardly in relation to the pedal sleeve (42), this rear edge (41) being able to serve as a fastening edge for a clip (43) fixed under the sole (13) of the shoe.

13. A pedal according to claim 5, characterised in that the needle bearing (12) is housed in a bore (44) made directly in the sleeve (42), while the pedal body comprises an upper wall (45) the internal face of which is tangential to the bore (44).

## Patentansprüche

1. Pedal für ein Fahrrad oder ein ähnliches Gerät, mit einem Pedalkörper, der eine zum Aufnehmen einer Querachse bestimmte Aufnahmeeinrichtung aufweist, wobei die Querachse an einem aus der Aufnahmeeinrichtung vorstehenden Ende an einer Kurbel befestigbar ist, der Pedalkörper auf der Querachse mit zwei Drehlagern rotierbar montiert ist, die jeweils in der Nähe der Enden der Achse vorgesehen sind, und das Drehlager, das an dem Außenende der Achse entfernt von der Kurbel vorgesehen ist, einen Außendurchmesser aufweist, der geringer ist als der Außendurchmesser des Drehlagers, das zur Anordnung in der Nähe der Kurbel vorgesehen ist, dadurch gekennzeichnet, daß der Pedalkörper (2) mit einer Stützfläche (S) für die Schuhsohle (13) des Benutzers versehen ist, die einen ebenen Oberflächenabschnitt aufweist, der im wesentlichen parallel zur geometrischen Achse (A) der Achse des Pedals (4) verläuft und sich ohne eine Unebenheit oder einen Vorsprung bis zum äußeren Seitenrand (33) des Pedalkörpers (2) erstreckt, wobei die Stützfläche (S) das Drehlager (11) überdeckt und mit einem Abstand (h) von der geometrischen Achse (A) angeordnet ist, der kleiner ist als die radiale Außenabmessung ($b$) des Körpers (2) auf der Ebene des Drehlagers (10), das zur Anordnung in der Nähe der Kurbel (5) vorgesehen ist, und wobei die Stützfläche (S) im Vergleich zu dem Drehlager (10) nach außen hin gerichtet ist.

2. Pedal nach Anspruch 1, dadurch gekennzeichnet, daß die Stützfläche (S) des Pedalkörpers (2) eine im wesentlichen rechteckige Form hat, wobei die große Abmessung parallel zur geometrischen Achse (A) ausgerichtet ist, während die kleine Abmessung der Fläche (S) größer ist als der Durchmesser der Achse (4) des Pedals.

3. Pedal nach Anspruch 2, dadurch gekennzeichnet, daß die kleine Abmessung der Stützfläche (S) doppelt so groß ist wie der Durchmesser der Achse (4) des Pedals.

4. Pedal für ein Fahrrad oder ein ähnliches Gerät, nach einem der vorhergehenden Ansprüche, dadurch gekennzeichnet, daß das Drehlager (10), das zur Anordnung in der Nähe der Kurbel (5) vorgesehen ist, ein Kugellager (18) aufweist und daß die Lagerung des Pedalkörpers (2) in bezug auf die Achse (4), in einer Richtung parallel zur geometrischen Achse (A) der Achse (4), nur durch das Kugellager (18) gewährleistet ist, während das Drehlager (11), das am Außenende der Achse (4) entfernt von der Kurbel (5) vorgesehen ist, aus einem Nadellager (12) besteht, wobei der Innenring (23) des Kugellagers (18) in bezug auf die Achse (4) mit Hilfe eines elastischen Anschlagteils (24) gehalten ist, das in dieser Achse verankert und nach außen angeordnet ist, und der Innenring (23) auf der anderen Seite durch eine Schulter (26) der Achse gehalten ist, während der Außenring (27) des Kugellagers nach innen hin durch eine Wand (3) der Aufnahmeeinrichtung des Pedalkörpers mit Hilfe eines elastischen Anschlagteils (28), das in der Wand (3) der Aufnahmeeinrichtung verankert ist, und auf der anderen Seite durch eine kreisförmige Schulter (29), die in dieser Wand der Aufnahmeeinrichtung vorgesehen ist, gehalten ist.

5. Pedal nach einem der vorhergehenden Ansprüche, bei dem das Drehlager, das an dem Außenende der Achse entfernt von der Kurbel vorgesehen ist, aus einem Nadellager (12) besteht, dadurch gekennzeichnet, daß die Mittelebene (Q) des Nadellagers in bezug auf die Längsmittelebene (P) der Stützfläche (S) des Pedals mit einem Abstand ($f$) von weniger als 10 mm und von der Längsmittelebene (P) nach außen hin angeordnet ist.

6. Pedal nach einem der vorhergehenden Ansprüche, dadurch gekennzeichnet, daß der Pedalkörper (2) eine vorzugsweise im wesentlichen kegelstumpfförmige Anschlußzone (31) zwischen dem Bereich (30), der das in der Nähe der Kurbel vorgesehene Drehlager (10) umgibt, und dem in bezug auf das Lager nach außen hin angeordneten Bereich (32) aufweist, die als Stützfläche (S) dient.

7. Pedal nach einem der vorhergehenden Ansprüche, dadurch gekennzeichnet, daß der Abstand (h) zwischen der Stützfläche (S) für die Schuhsohle (13) des Benutzers und der geometrischen Achse (A) der Querachse (4) kleiner als 10 mm ist und vorzugsweise ungefähr 9 mm beträgt.

8. Pedal nach einem der vorhergehenden Ansprüche, dadurch gekennzeichnet, daß der Querabstand ($t$) zwischen dem Innenrand des Pedalkörpers (2) und der Kurbel (5) klein genug ist, daß unabhängig von der Anschlußzone (31) zwischen dem Bereich (30), der das Drehlager (10) in der Nähe der Kurbel (5) umgibt, und der genannten Stützfläche (S) der mittlere Querabstand (K) zwischen der Längsmittelebene (P) der Stützfläche und der Kurbel (5) im wesentlichen dem Abstand bei einem herkömmlichen Pedal gleicht.

9. Pedal nach Anspruch 4 oder nach Anspruch 4 und einem der Ansprüche 5 bis 8, dadurch gekennzeichnet, daß bei einem Achsendurchmesser von 8 mm der Außendurchmesser des Nadellagers 12 mm beträgt.

10. Pedal nach einem der vorhergehenden Ansprüche, dadurch gekennzeichnet, daß ein Fenster (39) durch den Rand vor der Stützfläche (S) begrenzt ist und ein weiteres Fenster (40) durch den hinteren Rand (41) der Stützfläche (S) begrenzt ist, wobei der hintere Rand (41) rechteckig ist und parallel zur Achse (A) des Pedals angeordnet ist.

11. Pedal nach Anspruch 10, dadurch gekennzeichnet, daß der Abstand ($m$) des hinteren Randes (41) des Pedals zur geometrischen Achse (A) des Pedals kleiner ist als 20 mm.

12. Pedal nach einem der vorhergehenden Ansprüche, dadurch gekennzeichnet, daß der Pedalkörper eine Hülse (42) aufweist, in die die Achse (4) des Pedals eingreift, und daß die Stützfläche (S) einen hinteren Rand (41) aufweist, der in bezug auf die Hülse (42) des Pedals nach hinten hin vorsteht, wobei der hintere Rand (41) als Verhakungsanschlag für einen Haken (43) dienen kann, der unter der Schuhsohle (13) befestigt ist.

13. Pedal nach Anspruch 5, dadurch gekennzeichnet, daß das Nadellager (12) in einer Bohrung (44) ausgebildet ist, wobei der Pedalkörper eine obere Wand (45) aufweist, die mit ihrer Innenseite die Bohrung (44) tangiert.

FIG. 1

EP 0 233 423 B1

FIG. 2

FIG. 3

EP 0 233 423 B1